# EUROPEAN PATENT APPLICATION

(11) **EP 1 587 042 A1**
(43) Date of publication of application: **19.10.2005**
(21) Application number: 04016366.9
(22) Date of filing: 12.07.2004
(51) Int. Cl.: G08B 21/02, B60R 25/10

(54) **Method and device for sensing whether occupant sleeps inside vehicle**

(30) Priority: 16.04.2004 KR 2004026187
(71) Applicant: HK E-CAR Co., Ltd., Seoul (KR)
(72) Inventor: Kim, Sunchae, Yongin-shi, Gyunggi-do (KR)
(74) Representative: Kastel, Stefan

(57) **Abstract**

In a case where an occupant sleeps inside a vehicle for a long time while a heater or the like has been turned on, the occupant may be suffocated to death due to lowered concentration of oxygen within a closed interior space of the vehicle or due to a failure of an exhaust system of the vehicle, and the like. To prevent this, the occupant should be much careful of awaking from his/her sleep by setting an alarm function of an additional clock or the like before he/she sleeps. However, in a case where an occupant sleeps inside a vehicle, particularly after drinking, or an occupant sleeps inside a vehicle at a resting place or the shoulder of a rod due to his/her fatigue after driving for a long time, it is difficult to expect that the occupant would additionally set an alarm in advance to sleep. In the prior art, there were a method of sensing driver's sleepiness during traveling of a vehicle and awaking the driver from his/her sleepiness, or a technique for adding an alarm function manipulated directly by an occupant to a clock provided in a vehicle. However, the present invention provides a method and device for detecting a case where an occupant sleeps inside a vehicle for a predetermined period of time or greater, without an additional operation of the occupant for setting timer, or the like.

## Description

### BACKGROUND OF THE INVENTION

### 1. Field of the Invention

The present invention relates to a method and device for sensing whether an occupant sleeps inside a vehicle, and more particularly, to a method and device for sensing a case where an occupant sleeps inside a vehicle while an engine of the vehicle is running.

### 2. Description of the Related Art

In a case where an occupant sleeps inside a vehicle for a long time while a heater or the like has been turned on, the occupant may be suffocated to death due to lowered concentration of oxygen within a closed interior space of the vehicle or due to a failure of an exhaust system of the vehicle, and the like. To prevent this, the occupant should be much careful of awaking from his/her sleep by setting an alarm function of an additional clock or the like before he/she sleeps. However, in a case where an occupant sleeps inside a vehicle, particularly after drinking, or an occupant sleeps inside a vehicle at a resting place or the shoulder of a rod due to his/her fatigue after driving for a long time, it is difficult to expect that the occupant would additionally set an alarm in advance to sleep. Further, if the occupant turns on a heater while an engine of the vehicle is running, there may be a risk of death from suffocation as described above. Although Korean Patent No. 10-0308649 discloses a technique for sensing driver's sleepiness, this technique is merely a method of sensing driver's sleepiness during traveling of a vehicle and is complicated in configuration. Korean Utility Model Registration No. 20-0181005 discloses a technique for adding an alarm function manipulated directly by an occupant to a clock provided in a vehicle. However, there is inconvenience in that the occupant should separately manipulate the alarm function.

### SUMMARY OF THE INVENTION

An object of the present invention is to provide a means for sensing whether an occupant sleeps inside a vehicle for a certain period of time while an engine of the vehicle is running, as well as for awaking the occupant from his/her sleep by means of a simple configuration and device, or to provide a device for securing occupant's safety.

A first aspect of a method of sensing whether an occupant sleeps inside a vehicle according to the present invention comprises the steps of receiving information on whether an engine of the vehicle is running; receiving information on whether the vehicle is in a stationary state; and determining whether a state where the engine is running and the vehicle is in the stationary state is maintained for a predetermined period of time.

With such a constitution, in determining whether the occupant sleeps inside the vehicle for the predetermined period of time or greater, determination on whether the engine is running is made by receiving the information on whether an engine of the vehicle is running, and determination on whether the vehicle is in the stationary state in spite of running of the engine is made by receiving the information on whether the vehicle is in the stationary state. Meanwhile, since it is determined whether such a state is maintained for the predetermined period of time, it is possible to determine a case where the vehicle merely sticks in a traffic jam or a case where there is no risk of death from suffocation even though the occupant sleeps inside the vehicle.

The determination on whether the engine is running can be made by means of various methods including measurement of the engine rotational speed, measurement of the temperature of a coolant in the engine, detection of opening/closing of a throttle valve of the engine, detection of consumption of fuel, detection of exhaust gas from the engine, and the like.

Further, the determination on whether the vehicles is in the stationary state can be made by means of measurement of the vehicle speed, measurement of the number of revolution of a road wheel of the vehicle, measurement of the range of a transmission of the vehicle, and the like.

A second aspect of the method of sensing whether an occupant sleeps inside a vehicle according to the present invention further comprises the step of generating a predetermined output if it is determined that the state where the engine is running and the vehicle is in the stationary state is maintained for the predetermined period of time, in addition to the steps of the first aspect of the method according to the present invention.

With such a constitution, if the occupant sleeps inside the vehicle while the engine is running, and the predetermined period of time after which the occupant may be in danger such as death from suffocation has passed, a predetermined output such as an alarm sound or voice is generated to awake the occupant from his/her sleep, thereby avoiding the occupant from being suffocated to death.

A third aspect of the method of sensing whether an occupant sleeps inside a vehicle according to the present invention further comprises the step of operating the vehicle to secure the occupant's safety if it is determined that the state where the engine is running and the vehicle is in the stationary state is maintained for the predetermined period of time, in addition to the steps of the first aspect of the method according to the present invention.

With such a constitution, if the occupant sleeps inside the vehicle while the engine is running, and the predetermined period of time after which the occupant may be in danger such as death from suffocation has passed, auxiliary units of the vehicle are operated, for example, by causing the engine to stall, opening a window, or the like so as to avoid the occupant from being suffocated to death, thereby securing the occupant's safety.

A first aspect of a device for sensing whether an occupant sleeps inside a vehicle according to the present invention comprises a microprocessor unit including a computer-readable recording medium having a program recorded thereon which includes instructions for executing the steps of receiving information on whether an engine of the vehicle is running and information on whether the vehicle is in a stationary state; and determining whether a state where the engine is running and the vehicle is in the stationary state is maintained for a predetermined period of time.

With such a constitution, in the device for determining whether the occupant sleeps inside the vehicle for the predetermined period of time or greater, determination on whether the engine is running and determination on whether the vehicle is in the stationary state in spite of running of the engine are made by receiving the information on whether an engine of the vehicle is running and the information on whether the vehicle is in the stationary state. Meanwhile, due to the microprocessor unit including the computer-readable recording medium having the program recorded thereon which includes instructions for executing the steps of receiving the information on whether the engine of the vehicle is running and the information on whether the vehicle is in the stationary state and determining whether the state where the engine is running and the vehicle is in the stationary state is maintained for the predetermined period of time, it is possible to provide the device capable of determining a case where the vehicle merely sticks in a traffic jam or a case where there is no risk of death from suffocation even though the occupant sleeps inside the vehicle.

When the microprocessor unit receives the information on whether the engine of the vehicle is running, for example, the engine rotational speed can be received from an engine RPM sensor of the vehicle. Further, the information on whether the vehicle is in the stationary state can be received, for example, from a vehicle speed sensor so that if the vehicle speed is 0, it is determined that the vehicle is stationary. As such, the information about the determination on whether the engine is running and/or the vehicle is stationary can be obtained as data in a hardware manner.

Further, as for a method of obtaining data on the vehicle in a software manner, the information on the engine rotational speed and the vehicle speed can be obtained through an interface of an on-board diagnosis (OBD) unit via OBD communications with electronic controllers in the vehicle, such as an ECU or TCU, using K-Line scheme or CAN scheme.

As for the method of determining whether the engine of the vehicle is running, even when the measurement of the temperature of the coolant in the engine, the detection of opening/closing of the throttle valve, the detection of consumption of fuel, the detection of exhaust gas from the engine, or the like is employed, it can be implemented in a hardware manner in which the determination is made by interfacing signals received from a variety of sensors or in a software manner in which the determination is made by the OBD communications with the various electronic controllers.

Further, in the method of determining whether the vehicle is in the stationary state, it is also true for replacement with the measurement of the range of the transmission, the measurement of the rotation of the road wheel, or the like.

A second aspect of the device for sensing whether an occupant sleeps inside a vehicle according to the present invention further comprises an output-generating unit for generating a predetermined output, in addition to the elements of the first aspect of the device according to the present invention. The predetermined output can be achieved, for example, by generating an alarm voice or sound, by notifying a communication terminal that the occupant sleeps inside the vehicle through a communication means, or the like.

With such a constitution, if the occupant sleeps inside the vehicle while the engine is running, and the predetermined period of time after which the occupant may be in danger such as death from suffocation has passed, the predetermined output is generated to awake the occupant from his/her sleep, thereby avoiding the occupant from being suffocated to death.

A third aspect of the device for sensing whether an occupant sleeps inside a vehicle according to the present invention further comprises a vehicle-operating unit for operating the vehicle to secure the occupant's safety, in addition to the elements of the first aspect of the device according to the present invention.

With such a constitution, if the occupant sleeps inside the vehicle while the engine is running, and the predetermined period of time after which the occupant may be in danger such as death from suffocation has passed, auxiliary units of the vehicle are operated, for example, by opening a window, causing the engine to stall, or the like so as to avoid the occupant from being suffocated to death, thereby providing the device capable of securing the occupant's safety.

A fourth aspect of the device for sensing whether an occupant sleeps inside a vehicle according to the present invention is constructed such that the information on whether the engine of the vehicle is running and the information on whether the vehicle is in the stationary state are detected through on-board diagnosis (OBD) communications with electronic controllers of the vehicle in the first aspect of the device according to the present invention.

With such a constitution, it is possible to detect various on-board diagnosis information as well as the engine rotational speed and the vehicle speed through the on-board communications with the electronic controllers of the vehicle only by means of simple communication interfaces. It is also possible to incorporate the device for sensing whether the occupant sleeps inside the vehicle according to the present invention into an on-board diagnosis connector of the vehicle, thereby more simplifying the structure and facilitating mounting thereof on the vehicle.

### BRIEF DESCRIPTION OF THE DRAWINGS

The above and other objects, features and advantages of the present invention will become apparent from the following description of preferred embodiments given in conjunction with the accompanying drawings, in which:

Fig. 1 is a flowchart illustrating a method of sensing whether an occupant sleeps inside a vehicle according to the present invention;

Fig. 2 is a flowchart illustrating a method of generating a predetermined output if it is determined that an occupant sleeps inside a vehicle in accordance with the present invention;

Fig. 3 is a flowchart illustrating a method of performing a predetermined vehicle operation for securing occupant's safety if it is determined that an occupant sleeps inside a vehicle in accordance with the present invention;

Fig. 4 is a block diagram showing the configuration of a device for sensing whether an occupant sleeps inside a vehicle according to an embodiment of the present invention; and

Fig. 5 is a block diagram showing the configuration of a device for sensing whether an occupant sleeps inside a vehicle according to another embodiment of the present invention.

### DETAILED DESCRIPTION OF THE INVENTION

Hereinafter, preferred embodiments of the present invention will be described in detail with reference to accompanying drawings.

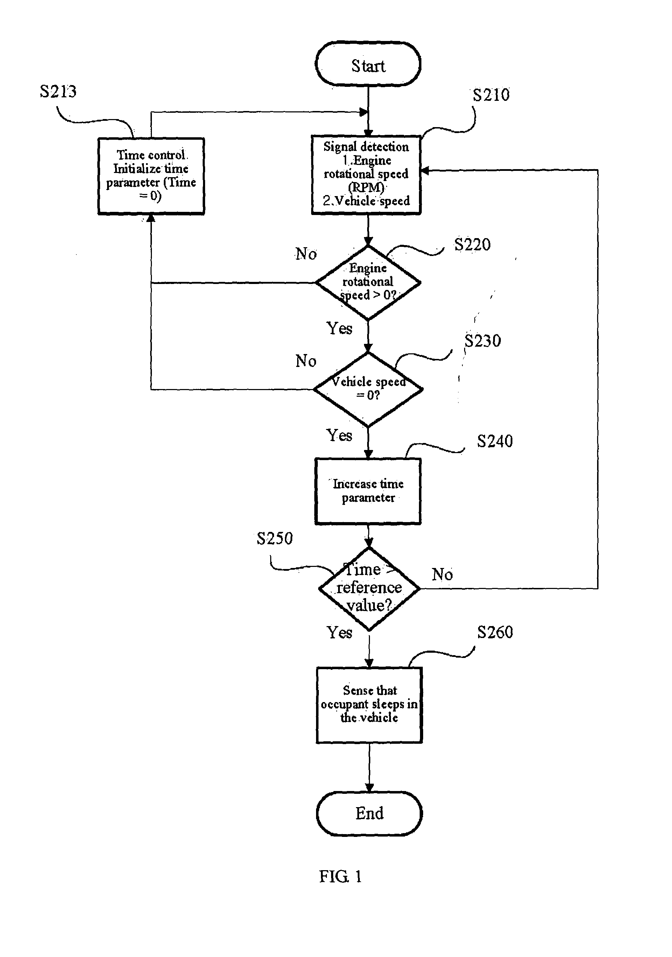

Fig. 1 is a flowchart illustrating a method of sensing whether an occupant sleeps inside a vehicle according to a preferred embodiment of the present invention.

As shown in Fig. 1, signals are first detected in step S210. At this time, the signals are signals detected by devices for measuring an engine rotational: speed (RPM) and a vehicle speed, respectively. Then, the procedure goes to step S220 in which it is determined, based on the signals measured in step S210, whether the engine rotational speed is greater than 0. If the result of the determination is "Yes," the procedure goes to step S230. If the result of the determination is "No," the procedure goes to step S213 in which a time parameter is initialized and through which the procedure returns to the initial start step. Thus, the procedure starts from the first step again. Meanwhile, step 230 is the step of determining, based on the measured signals, whether the measured vehicle speed is 0 based on the measured signals. If the result of the determination is "Yes," the procedure goes to step S240. If the result of the determination is "No," the procedure goes to step S213 in which the time parameter is initialized and through which the procedure returns to the initial start step. Thus, the procedure starts from the first step again. Meanwhile, step S240 is the step of increasing the time parameter. After the time parameter is increased, the procedure goes to step S250. Step S250 is the step of determining whether the increased time parameter is greater than a predetermined reference value. If the result of the determination is "Yes," the procedure goes to step S260. If the result of the determination is "No," the procedure returns to step S210 so as to repeat the step of detecting the engine rotational speed and the vehicle speed. Step S260 is the step of sensing that the occupant sleeps inside the vehicle while an engine of the vehicle is running, if the engine rotational speed is greater than 0 and a state where the vehicle speed is 0 is maintained for a certain period of time greater than a predetermined reference value. At this time, the detection of such signals can be achieved by means of vehicle information measurement units and/or on-board diagnostic communications provided in the vehicle.

In the meantime, as another embodiment of the present invention, step S250 of determining whether the time parameter is greater than the reference value may be replaced with the step of determining whether the time parameter is identical to or greater than the reference value. Further, the determination on whether the state where the engine rotational speed (RPM) is greater than 0 and the vehicle speed is 0 has been continued for a predetermined period of time may be made by means of a method of operating an additional timer, or the like when the state is established.

Preferably, a period of time that will be the predetermined reference value is determined to be shorter than a known period of time after which an occupant may be suffocated to death if he/she sleeps inside a vehicle while an engine of the vehicle is running.

The detection of the signals of the engine rotational speed and the vehicle speed in steps S210 and S220 may be achieved with hardware by means of sensors for measuring the engine rotational speed and the vehicle speed, or with software by means of on-board diagnostic communications with electronic controllers in the vehicle such as an ECU and/or a TCU of the vehicle.

Meanwhile, although the detection of the signal of the engine rotational speed is to sense whether the engine is running, it is also possible to sense whether the engine is running, by receiving other various signals indicating an operating state of the engine.

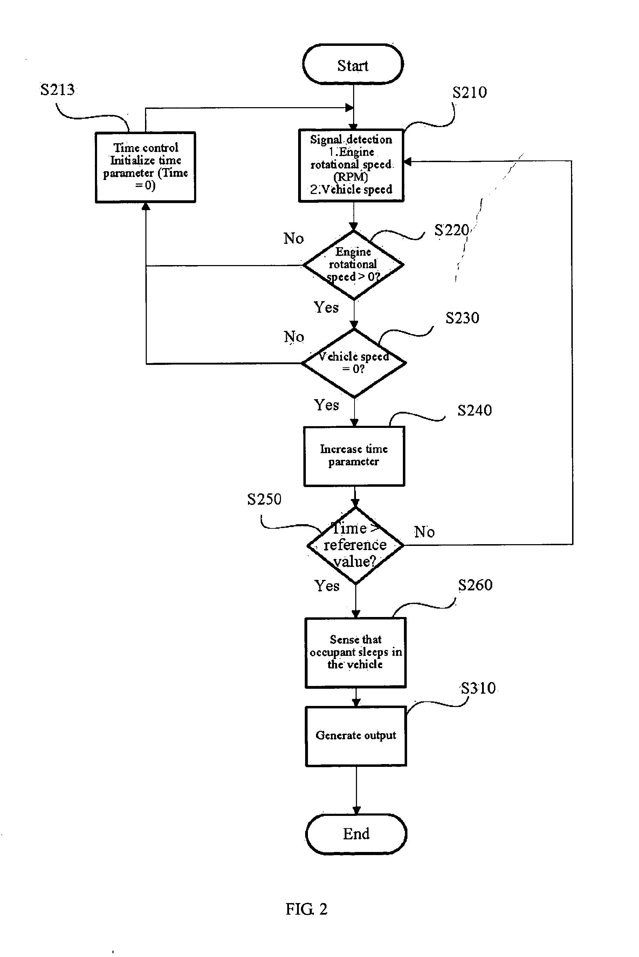

Fig. 2 shows a flowchart illustrating a method of generating a predetermined output if it is determined that an occupant sleeps inside a vehicle in accordance with an embodiment of the present invention. As shown in Fig. 2, the method of generating a predetermined output if it is determined that an occupant sleeps inside a vehicle further comprises the step of outputting the predetermined output (S310) after the step of sensing that the occupant sleeps inside the vehicle while the engine is running (S260) shown in Fig. 1 as described above. The outputting step may be achieved by awaking the occupant who sleeps inside the vehicle from his/her sleep, informing a third person that the occupant sleeps inside the vehicle for a certain period of time, or the like.

Therefore, the output generating step S310 is preferably constructed by using a voice signal output that has been already recorded and stored or generated by a voice signal generator to awake the occupant through an audio device or like, and/or an alarm sound output for awaking the occupant through an audio device or like, and/or a communication signal output for operating a communication terminal such as a cellular phone to awake the occupant through a communication means. At this time, it is preferred that the communication means for the communication terminal be constructed by means of an R/F communication method, e.g., Blue Tooth scheme. Further, the output generating step S310 may be constructed by causing an alarm sound and/or voice signal to be output outside of the vehicle in order to notify a third person passing by the vehicle that the occupant sleeps inside the vehicle for a certain period of time and thus is in danger. Alternatively, it may be constructed such that a third organization such as a police station, a fire station, a hospital or an insurance company is notified through such a communication means that the occupant sleeps inside the vehicle for a certain period of time and thus is in danger. Preferably, in such a case where a third person is notified of the situation through his/her communication terminal, it is possible to inform the position of the occupant which is found by a GPS or the like.

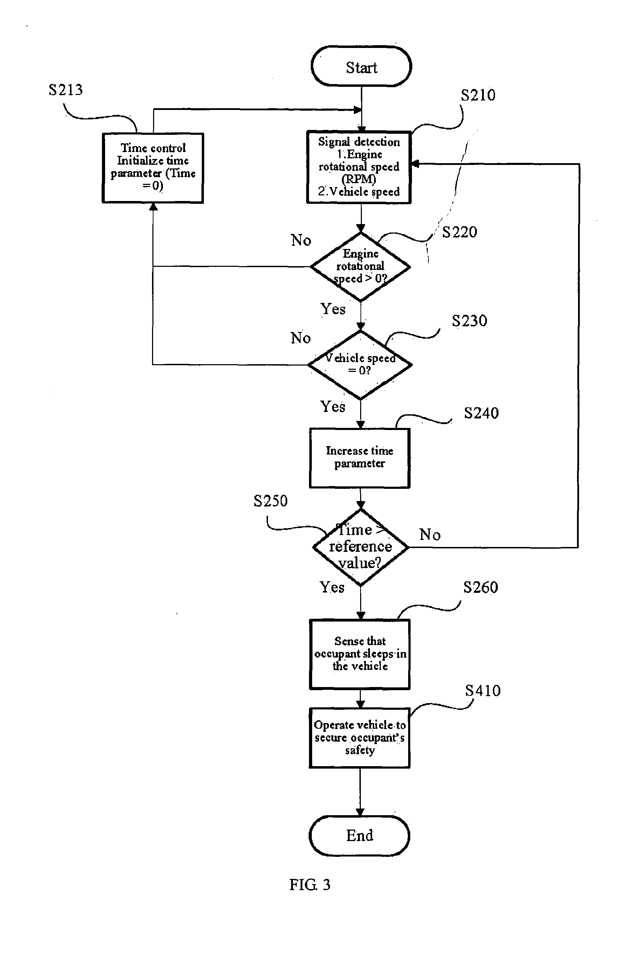

Fig. 3 is a flowchart illustrating a method of performing a predetermined vehicle operation for securing occupant's safety if it is determined that an occupant sleeps inside a vehicle in accordance with an embodiment of the present invention. As shown in Fig. 3, the method of performing a predetermined vehicle operation for securing occupant's safety if it is determined that an occupant sleeps inside a vehicle further comprises the step of performing a vehicle operation for securing occupant's safety (step S410) after the step of sensing that the occupant sleeps inside the vehicle while the engine is running (S260) shown in Fig. 1 as described above. The step of performing a vehicle operation for securing occupant's safety can comprise safety-securing measures for avoiding a risk of death from suffocation even though the occupant continuously sleeps inside the vehicle for a predetermined period of time or greater.

Therefore, the vehicle operation-performing step S410 can be preferably constructed with an operation for opening and closing a window of the vehicle to achieve ventilation, and/or an operation for forcibly causing the engine to stall, and/or an operation for venting air in the vehicle, using a controller or the like provided in the vehicle.

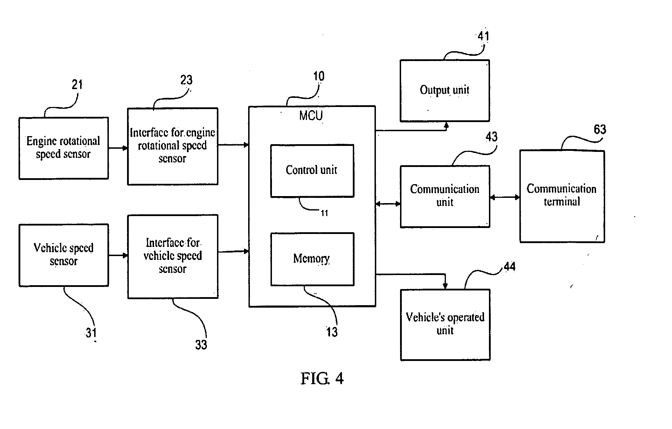

Fig. 4 is a block diagram showing the configuration of a device for sensing whether an occupant sleeps inside a vehicle according to an embodiment of the present invention. As shown in Fig. 4, the device for sensing whether an occupant sleeps inside a vehicle comprises a microprocessor unit (MCU) 10. Meanwhile, the microprocessor unit 10 comprises a control unit 11 and a memory 13. Further, the microprocessor unit 10 can be constructed to include a computer-readable recording medium with a program recorded therein for executing the steps of receiving information on an engine rotational speed of the vehicle based on data converted through a interface 23 for converting signals obtained from an engine rotational speed sensor 21, and information on a vehicle speed of the vehicle based on data converted through a interface 33 for converting signals obtained from a vehicle speed sensor 31; and determining whether the engine rotational speed is greater than 0 and the vehicle speed remains 0 for a predetermined period of time. Preferably, the program is stored in the memory 13.

With this structure, it is possible to construct a device for sensing whether the occupant sleeps inside the vehicle for a predetermined period of time or greater, by obtaining data on the engine rotational speed and the vehicle speed through hardware interfacing of the signals obtained from the engine rotational speed sensor 21 and the vehicle speed sensor 31 and by executing the program that performs the step of determining whether the occupant sleeps inside the vehicle through determination on whether the engine rotational speed written in the microprocessor unit 10 is greater than 0 and the vehicle speed remains 0 for the predetermined period of time, based on the above data. If such a state is maintained for the predetermined period of time or greater, the device senses that the occupant sleeps inside the vehicle for the predetermined period of time or greater.

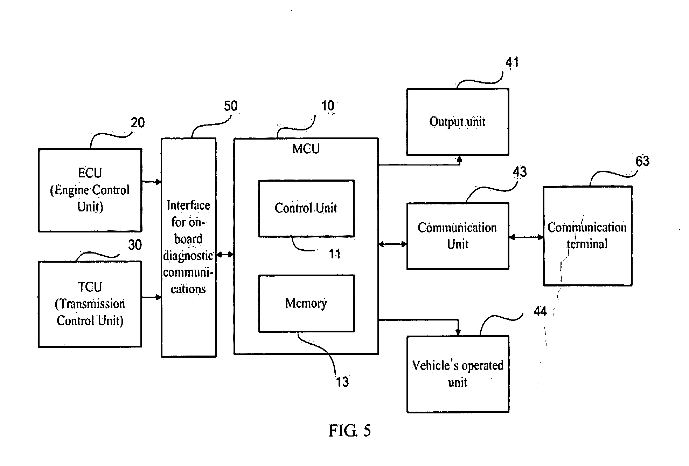

Fig. 5 is a block diagram showing the configuration of a device for sensing whether an occupant sleeps inside a vehicle according to another embodiment of the present invention. As previously shown in Fig. 4, the device for sensing whether the occupant sleeps inside the vehicle for the predetermined period of time or greater can comprise the microprocessor unit 10. Contrary to the configuration of Fig. 4 in which the engine rotational speed and the vehicle speed are detected and then input in a hardware manner, Fig. 5 shows the configuration in which the detection and input of the speeds are implemented in a software manner.

The device for sensing whether the occupant sleeps inside the vehicle, which is shown in Fig. 5, is implemented with software in such a manner that data on the vehicle such as the engine rotational speed and/or the vehicle speed are obtained by means of on-board diagnostic communications using a communication method such as K-Line scheme or CAN scheme through an on-board diagnostic communication interface 50 of the vehicle with an engine control unit (ECU) 20, a transmission control unit (TCU) 30 and the like, and the information thus obtained is input into the microprocessor unit 10.

With this structure, it is possible to directly provide the microprocessor unit 10 with the engine rotational speed and the vehicle speed and to incorporate the device for sensing whether the occupant sleeps inside the vehicle according to the present invention into a connector for an on-board diagnosis (OBD) device of the vehicle, thereby simplifying the structure and facilitating mounting thereof on the vehicle. Moreover, there is an advantage in that the connector for the on-board diagnosis device mounted on the vehicle can be used.

As shown in Figs. 4 and/or 5, the device for sensing whether the occupant sleeps inside the vehicle can include an output unit 41 operated under control of the microprocessor unit 10. The output unit 41 is preferably constructed of an output means capable of outputting a voice alarm and/or an alarm sound, which notify that the occupant sleeps inside the vehicle for the predetermined period of time or greater while the engine of the vehicle is running, inside/outside the vehicle, as described above.

As shown in Figs. 4 and/or 5, the device for sensing whether the occupant sleeps inside the vehicle can include a communication unit 43 operated under control of the microprocessor unit 10. The communication unit 43 may be constructed to notify the occupant and/or a third person's communication terminal 63 that the occupant sleeps inside the vehicle for the predetermined period of time or greater while the engine of the vehicle is running, as described above. At this time, it is preferred that the position of the vehicle and/or the occupant provided by a global positioning system (GPS) or the like be transmitted together with the notification to the third person.

As shown in Figs. 4 and/or 5, the device for sensing whether the occupant sleeps inside the vehicle can include a vehicle's operated unit 44 operated under control of the microprocessor unit 10. The vehicle's operated unit 44 may be a unit capable of securing the occupant's safety so that the occupant is not in danger such as death from suffocation even though he/she continuously sleeps inside the vehicle for the predetermined period of time or greater while the engine of the vehicle is running, as described above. Therefore, preferably, the vehicle's operated unit 44 may be constructed of a window of the vehicle to be opened and closed, a ventilation equipment, the engine or the like under control of the microprocessor unit 10.

Meanwhile, although Figs. 4 and/or 5 show all of the output unit 41, the communication unit 43, the vehicle's operated unit 44 and the communication terminal 63 in connection with the device for sensing whether the occupant sleeps inside the vehicle, they merely show an embodiment of the present invention. It will be understood that the present invention may be implemented with or without only some of the output unit 41 and/or the communication unit 43 and/or the vehicle's operated unit 44 and/or the communication terminal 63.

Further, although Figs. 1 to 5 show that a method of obtaining information on whether the engine of the vehicle is running is the method of detecting whether the number of revolution of the engine is greater than 0, this is merely an embodiment of the present invention. In addition thereto, the method of obtaining information on whether the engine of the vehicle is running may be replaced with a method of detecting whether a throttle vale of the engine is opened, a method of detecting whether the temperature of a coolant in the vehicle exceeds a predetermined temperature, a method of detecting whether fuel is consumed by measuring the amount of fuel in the vehicle, a method of detecting whether there is an exhaust gas, or the like. In such constitutions, a method of inputting signals from sensors for checking whether the engine is running and a method of determining whether the occupant sleeps inside the vehicle for a predetermined period of time or greater while the engine is running is nearly similar to the method of detecting the number of revolution of the engine and/or the method of determining whether the occupant sleeps inside the vehicle for the predetermined period of time or greater, which have been described in connection with the previous embodiments of the present invention. It will be understood that such methods and/or constitutions do not depart from the scope of the present invention.

Furthermore, although Figs. 1 to 5 show that a method of determining whether the vehicle is in a stationary state is the method of detecting whether the vehicle speed is 0, this is merely an embodiment of the present invention. In addition thereto, the range of a transmission of the vehicle may be measured to obtain information on whether the range of the transmission is "parking," "neutral" or the like. If the range of the transmission is "parking" or "neutral," it can be determined that the vehicle is in the stationary state. Further, the number of revolution of a road wheel of the vehicle may be measured. If the number of revolution of the road wheel of the vehicle is 0, it can be determined that the vehicle is in the stationary state. In such constitutions, a method of inputting signals from sensors for checking whether the vehicle is in the stationary state and a method of determining whether the occupant sleeps inside the vehicle for a predetermined period of time or greater while the engine is running is nearly similar to the method of detecting the vehicle speed and/or the method and/or device for determining whether the occupant sleeps inside the vehicle for the predetermined period of time or greater, which have been described in connection with the previous embodiments of the present invention. It will be understood that such methods and/or devices do not depart from the scope of the present invention.

According to the present invention, it is possible to sense whether an occupant sleeps inside a vehicle for a predetermined period of time or greater, with a simple constitution. With such a constitution, it is possible to awake the occupant from his/her sleep or notify a third person that the occupant sleeps inside the vehicle for the predetermined period of time or greater and thus is in danger, through devices provided inside/outside of the vehicle. Further, it is possible to actuate a vehicle's operated unit so as to secure the occupant's safety even though the occupant continuously sleeps inside the vehicle. Thus, the present invention can avoid in advance a risk of death from suffocation or the like that may occur when the occupant sleeps inside the vehicle for the predetermined period of time or greater.

Although the present invention has been described in connection with the embodiments illustrated in the accompanying drawings, the scope of the present invention is defined by the appended claims and it should not be construed as being limited to the embodiments. It should be readily understood that various modifications, changes and adaptations obvious to those skilled in the art and set forth in the claims fall within the scope of the present invention.

## Claims

1. A method of sensing whether an occupant sleeps inside a vehicle, comprising the steps of:
receiving information (S210, S220) on whether an engine of the vehicle is running;
receiving information (S210, S230) on whether the vehicle is in a stationary state; and
determining (S250) whether a state where the engine is running and the vehicle is in the stationary state is maintained for a predetermined period of time.

2. The method as claimed in claim 1, **characterized by** the step of:
if it is determined that the state where the engine is running and the vehicle is in the stationary state is maintained for the predetermined period of time, generating (S310) a predetermined output.

3. The method as claimed in claim 1, **characterized by** the step of:
if it is determined that the state where the engine is running and the vehicle is in the stationary state is maintained for the predetermined period of time, operating (S410) the vehicle to secure the occupant's safety.

4. A device for sensing whether an occupant sleeps inside a vehicle, comprising:
a microprocessor unit (10) including a computer-readable recording medium (13) having a program recorded thereon,
the program including instructions for executing the steps of:
receiving information (S210, S220) on whether an engine of the vehicle is running and information (S210, S220) on whether the vehicle is in a stationary state; and
determining (S250) whether a state where the engine is running and the vehicle is in the stationary state is maintained for a predetermined period of time.

5. The device as claimed in claim 4, **characterized by** an output-generating unit (41) for generating a predetermined output if it is determined that the state where the engine is running and the vehicle is in the stationary state is maintained for the predetermined period of time.

6. The device as claimed in any of the claims 4 or 5, **characterized by** a vehicle-operating unit (44) for operating the vehicle to secure the occupant's safety if it is determined that the state where the engine is running and the vehicle is in the stationary state is maintained for the predetermined period of time.

7. The method as claimed in any one of claims 1 to 3, **characterized in that** the information on whether an engine of the vehicle is running is an engine rotational speed.

8. The device as claimed in any one of claims 4 to 6, **characterized in that** the information on whether an engine of the vehicle is running is an engine rotational speed.

9. The method as claimed in any one of claims 1 to 3, or 7, **characterized in that** the information on whether the vehicle is in the stationary state is a vehicle speed.

10. The device as claimed in any one of claims 4 to 6, or 8 **characterized in that** the information on whether the vehicle is in the stationary state is a vehicle speed.

11. The method as claimed in any of the claims 1 to 3, 7, or 9, **characterized in that** at least one of the information on whether the engine of the vehicle is running and the information on whether the vehicle is in the stationary state is detected through on-board diagnosis (OBD) communications with the vehicle.

12. The device as claimed in any of the claims 4 to 6, 8, or 10, **characterized in that** at least one of the information on whether the engine of the vehicle is running and the information on whether the vehicle is in the stationary state is detected through on-board diagnosis (OBD) communications with the vehicle.
